# EUROPÄISCHE PATENTANMELDUNG

(11) **EP 4 361 011 A1**
(43) Veröffentlichungstag der Anmeldung: **01.05.2024**
(21) Anmeldenummer: 22000203.4
(22) Anmeldetag: 26.10.2022
(51) Int. Cl.: B62J 43/13, B62L 3/02, B62M 6/55, B62M 6/90

(54) **EINRICHTUNG ZUR RÜCKGEWINNUNG VON STROM (REKUPERIEREN) BEI ZWEIRÄDERN ODER DREIRÄDERN MIR ELEKTROMOTOR UND BATTERIE**

(71) Anmelder: Eisele, Raymund Heinrich, 83043 Bad Aibling (DE)
(72) Erfinder: Eisele, Raymund Heinrich, 83043 Bad Aibling (DE)

(57) **Zusammenfassung**

Die Erfindung bezieht sich auf eine Einrichtung zur Rückgewinnung von Strom (rekuperieren) bei Zweirädern (eBikes, eMTBs, Motorrädern) mit Elektromotor und Batterie.

Erfindungsgemäß wird diese Aufgabe dadurch gelöst, dass bei der Betätigung des Bremshebels für das Hinterrad durch einen Bowdenzug eine am Hinterrad angebrachte Schleifkupplung betätigt wird, die dazu führt, dass durch eine Schubumkehr die Antriebsmechanik (Kette, Zahnriemen oder Kardanwelle) rückwärts läuft und dadurch der Elektromotor zum Stromgenerator wird und die Batterie geladen wird.

## Beschreibung

Die Erfindung bezieht sich auf eine Einrichtung zur Rückgewinnung von Strom (rekuperieren) bei Zweirädern (eBikes, eMTBs, Motorrädern) mit Elektromotor und Batterie. Auch bei entsprechenden Dreirädern kann die Erfindung eingesetzt werden.

Typische Einrichtungen, bei denen die Rückgewinnung von Strom (rekuperieren) erfolgt, sind Autos mit Elektroantrieb. Dabei wird bei einem Bremsvorgang zunächst der Energiefluss von der Batterie zum Elektromotor umgekehrt, so dass der Elektromotor Strom generiert und in die Batterie einspeist.

Die Druckschriften EP 2 615 023 A1 und DE 10 2016 113 871 B4 offenbaren Möglichkeiten zur Rekuperation bei Fahrrädern. Die Druckschrift WO 2012/ 023 310 A1 offenbart ein Fahrrad mit einem Umkehrgetriebe.

Der vorliegenden Erfindung liegt die Aufgabe zugrunde, das Rekuperieren auch bei Zweirädern oder Dreirädern mit Elektroantrieb zu gewährleisten.

Erfindungsgemäß wird diese Aufgabe dadurch gelöst, dass bei der Betätigung des Bremshebels für das Hinterrad durch einen Bowdenzug eine am Hinterrad angebrachte Schleifkupplung betätigt wird, die dazu führt, dass durch eine Schubumkehr die Antriebsmechanik (Kette, Zahnriemen oder Kardanwelle) rückwärts läuft und dadurch der Elektromotor zum Stromgenerator wird und die Batterie geladen wird.

Zweckmäßig wird die Einrichtung zur Schubumkehr über Zahnräder in der Nabe des Hinterrades gesteuert.

Im übrigen dient das Rekuperieren nicht nur zur Stromerzeugung sondern auch dazu, um den Bremsvorgang zu verstärken. Je geringer der eingelegte Gang ist, desto höher ist die Bremsleistung und damit das Rekuperieren. Sollte mehr Bremskraft erforderlich sein, als durch das Rekuperieren gegeben ist, kann zusätzlich der Bremsvorgang durch herkömmliche Bremsen erfolgen. Die Bremseinrichtung für das Vorderrad dient als Zusatzbremse und für eine Notbremsung.

Ein typisches Beispiel für die Zweckmäßigkeit dieser Erfindung soll folgendes gelten. Man fährt mit einem eMTB und Motorunterstützung auf einen Berg. Die Rückfahrt ist steil, deshalb muss stark gebremst werden. Dadurch schmerzen die Hände oder bei einem guten Bremsverstärker werden die Bremsscheiben heiß oder glühen sogar. Durch das Rekuperieren wird nicht nur Bremsenregie in Strom verwandelt, sondern ist auch besser für Hände und Material. Zudem wird dadurch die Reichweite der Batterie erhöht.

Es zeigen:
Fig. 1 ein Zweirad mit Elektromotor und Batterie
Fig. 2 einen erfindungsgemäß dargestellten Querschnitt der Nabe des Hinterrads
Fig 3 den erfindungsgemäß dargestellten Antrieb z. B. über eine Kette
Fig 4 Die Funktionsweise der Schleifkupplung
Fig 5 Die Mechanik zur Schubumkehr

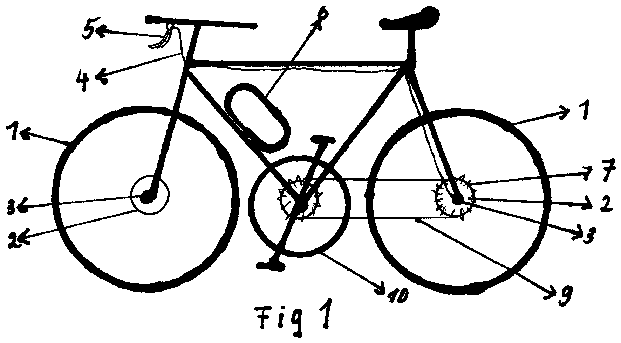

Das in Fig 1 dargestellte Zweirad mit Vorder- und Hinterrad 1 umfasst einen Elektromotor 10, eine Batterie 6, ein Ritzel 7, eine Nabe 2, zwei Achsen 3, eine Kette 9, einen Bremshebel 5, einen Bowdenzug 4

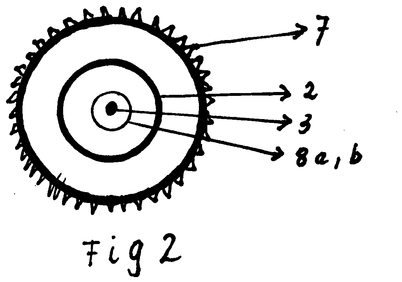

Der in Fig 2 dargestellte Querschnitt der Nabe des Hinterrads zeigt die Achse 3, die Nabe 2, das Ritzel 7, das Verbindungsrohr 8a mit der Schleifkupplung 8b

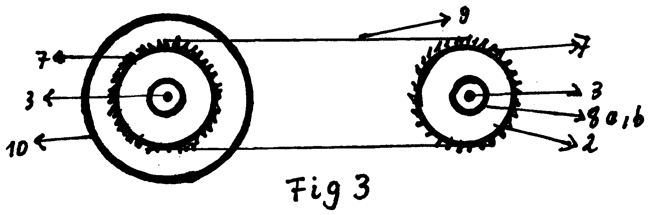

Der in Fig 3 dargestellte Antrieb z. B. über eine Kette 9 zeigt das am Elektromotor befindliche Antriebszahnrad sowie die erfindungsgemäß dargestellten Bauteile der Nabe 2 des Hinterrads mit dem Ritzel 7 der Achse 3 sowie das Rohr 8a mit der Schleifkupplung 8b

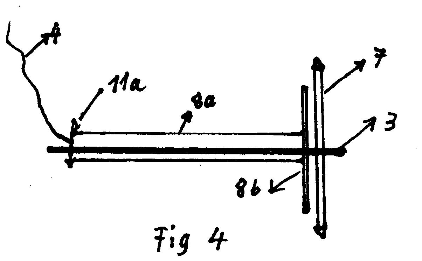

Fig 4 zeigt die Funktionsweise der Schleifkupplung 8b, das Verbindungsrohr 8a, das einerseits mit der Schleifkupplung 8b und andererseits mit dem Zahnrad 11a verbunden ist. Durch die Betätigung des Bremshebels 5 wird über den Bowdenzug 4 die Schleifkupplung gegen das Zahnrad 7 gedrückt und leitet damit das Rekuperieren ein.

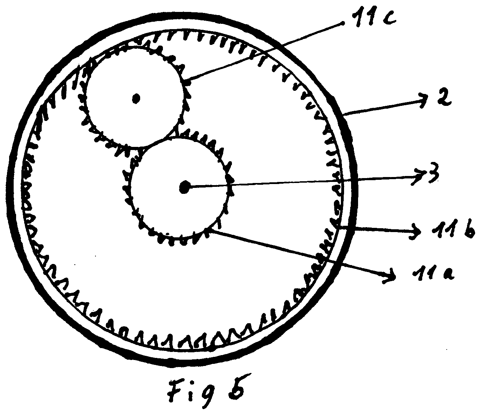

Fig 5 zeigt wie die Mechanik der Schubumkehr funktioniert. Dabei wird ein Zahnkranz 11b an der Nabe 2 befestigt. Für die Schubumkehr wird das Zahnrad 11c benötigt, das dann das Zahnrad 11a entgegen der Fahrtrichtung dreht und damit das Rekuperieren ermöglicht.

### Bezugszeichenliste

1 Rad
2 Nabe
3 Achse
4 Bowdenzug
5 Bremshebel
6 Batterie
7 Ritzel
8a Rohr
8b Schleifkupplung
9 Kette (Zahnriemen, Kardanwelle)
10 Elektromotor
11a Zahnrad, am Rohr 8a befestigt
11b Zahnkranz, an Nabe 2 befestigt
11c Zahnrad

## Patentansprüche

1. Zweirad oder Dreirad mit Elektromotor (10) und einer Batterie (6), **dadurch gekennzeichnet, dass**
durch eine Betätigung einer Bremseinrichtung (5, 4) in einer Nabe (2) der Hinterachse (3) durch den Einsatz von Zahnrädern (1 1a, 11b, 11c) über ein Rohr (8a) eine Schleifkupplung (8b) gegen ein Ritzel (7) gedrückt wird
und damit eine Kette (9) rückwärts läuft
und damit der Elektromotor (10) Strom generiert
und in die damit verbundenen Batterie (6) einspeist.

2. Zweirad oder Dreirad nach Anspruch 1, **dadurch gekennzeichnet, dass** statt der Kette (9) ein Zahnriemen mit entsprechenden Zahnrädern eingesetzt wird.

3. Zweirad oder Dreirad nach Anspruch 1, **dadurch gekennzeichnet, dass** statt der Kette (9) ein Kardanantrieb eingesetzt wird.

4. Zweirad oder Dreirad nach einem der vorhergehenden Ansprüche, **dadurch gekennzeichnet, dass**
es sich bei dem Zweirad um ein eBike, eMTB oder ein Motorrad handelt.
